# FASCICULE DE BREVET EUROPEEN

(11) **EP 0 995 995 B1**
(45) Date de publication et mention de la délivrance du brevet: **08.11.2006**
(21) Numéro de dépôt: 99402623.5
(22) Date de dépôt: 22.10.1999
(51) Int. Cl.: G01P 3/487, G01P 3/484, G01D 5/251

(54) **Capteur pour la mesure de la vitesse et du sens de rotation d'une pièce rotative**
Messwertgeber für Drehgeschwindigkeit und Drehrichtung eines rotierenden Teils
Transducer for measurement of speed and direction of rotation of a body

(30) Priorité: 23.10.1998 FR 9813296
(43) Date de publication de la demande: 26.04.2000
(73) Titulaire: Societe Anonyme de Production de Procédés de Comptage de l'Eau et Autres Liquides, SAPPEL, 68300 Saint Louis (FR)
(72) Inventeur: Bach, Guy, 68220 Michelbach-le-Haut (FR)
(74) Mandataire: Fosse, Danièle

(56) Documents cités:
- EP-A- 0 836 072
- DE-A- 2 252 867
- DE-A- 3 611 439
- JP-A- 63 238 513
- US-A- 4 758 825
- PATENT ABSTRACTS OF JAPAN vol. 011, no. 311 (P-625), 12 octobre 1987 (1987-10-12) -& JP 62 102160 A (MITSUBISHI ELECTRIC CORP), 12 mai 1987 (1987-05-12)

## Description

La présente invention concerne un capteur pour la mesure de la vitesse de rotation d'une pièce rotative par l'intermédiaire d'un aimant monté sur ladite pièce et permettant également la détermination du sens de rotation.

Ce type de capteur est en général utilisé dans des dispositifs de mesure tels que, par exemple, des compteurs pour liquides où l'on cherche à déterminer le nombre de révolutions effectuées par une pièce interposée dans le flux du liquide à mesurer et animée d'un mouvement de rotation sous l'effet dudit flux. Il est ainsi courant de mettre en place, sur la pièce en rotation, un aimant permanent associé à un interrupteur à lame souple (ILS) disposé fixe à proximité dudit aimant.

Dans le domaine général des dispositifs de mesure tels que des compteurs, il est usuel d'utiliser des interrupteurs à lames à souples. Ainsi, on connaît par JP-A-62102160 un compteur de vitesse automobile fonctionnant avec un interrupteur reed auquel est associé un second interrupteur reed de manière à corriger le problème de rebond du premier interrupteur reed utilisé dans le compteur de vitesse automobile. Ce deuxième interrupteur reed définit un angle de 112°5 avec le premier interrupteur lors de sa mise en place de manière à avoir toujours l'un des deux interrupteurs dans un état stable alors que l'autre peut éventuellement générer des impulsions parasites dues aux rebonds.

Dans EP-A-0 836 072, on décrit un résolveur utilisant la technologie des aimants permanents pour déterminer la position relative d'un arbre. Ce dispositif comporte un aimant tournant servant à commander un capteur haute résolution tandis que des capteurs basse résolution sous forme d'interrupteurs associés à des aimants permanents sont commandés par un demi anneau tournant en métal magnétique. Ce type de dispositif n'a pour but que de déterminer la position relative d'un arbre.

Un interrupteur à lame souple présente la faculté de fermer un contact électrique lorsqu'il est polarisé selon son axe par un champ magnétique dont l'intensité atteint le seuil de fermeture et ce contact s'ouvre à nouveau si le champ magnétique atteint le seuil d'ouverture, le seuil d'ouverture étant bien entendu inférieur au seuil de fermeture. Un interrupteur à lames souples présente donc une hystérèsis.

Un tel ensemble (aimant permanent sur la pièce en rotation associé à un interrupteur à lame souple (ILS) disposé fixe à proximité dudit aimant) permet donc, avec un composant passif peu onéreux tel que l'aimant en rotation, une mesure de la rotation d'une pièce pour un coût global très avantageux et en consommant une énergie électrique minimale ou nulle. Un tel ensemble peut en outre fonctionner dans un environnement relativement sale et peut également fonctionner dans des structures où des matériaux non magnétiques s'interposent entre l'aimant et l'interrupteur à lames souples, tels que par exemple une paroi de boîtier.

De manière à obtenir un capteur ne présentant qu'une seule fermeture du contact électrique au cours d'une révolution de l'aimant associé à la pièce tournante, il est connu de placer à proximité de l'interrupteur à lame souples un second aimant permanent fixe de polarisation de telle sorte que la valeur moyenne de l'intensité du champ magnétique total se situe au milieu de l'hystérèsis.

Bien que ce dernier ensemble présente un coût de revient peu élevé, il est peu exploité par rapport à l'ensemble sans aimant de polarisation.

En effet, de tels capteurs ne permettent pas de déterminer le sens de rotation de l'aimant. Ainsi, si on associe à l'aimant permanent associé à la pièce en rotation un totalisateur mécanique capable de s'incrémenter d'une unité pour une révolution complète dans un sens et de se décrémenter d'une unité pour une révolution complète en sens inverse, il n'est pas possible de suivre électroniquement cet index mécanique en exploitant les capteurs décrits ci-dessus.

Dans DE-A-3611439, on décrit un détecteur de vitesse et de sens de rotation utilisant deux interrupteurs magnétiques et une pièce magnétique. Ces deux interrupteurs permettent la délivrance d'un signal en quadrature permettant de reconnaître le sens de rotation de la pièce magnétique tournante qui est de forme torique. Cette pièce de forme torique doit donc être assez volumineuse pour pouvoir actionner les deux interrupteurs magnétiques. Un tel aimant permanent tournant présente donc une forme particulière et, lorsqu'on souhaite mettre en oeuvre un tel capteur sur un compteur d'eau, il convient d'adapter l'architecture du compteur d'eau, l'aimant utilisé dans celui-ci ne convenant pas.

La présente invention a donc pour but de proposer un capteur pour la mesure de la rotation d'une pièce rotative, et permettant de déterminer également le sens de rotation de la pièce, destiné en particulier à un compteur de liquide ou gaz ou électricité.

A cet effet, l'invention a pour objet un capteur pour la mesure de la vitesse et du sens de rotation d'une pièce rotative, destiné en particulier à un compteur de liquide ou gaz ou électricité du type comportant un aimant permanent monté sur la pièce rotative dit tournant et deux interrupteurs à lames souples disposés dans le champ magnétique de l'aimant permanent tournant, caractérisé en ce que les deux interrupteurs à lames souples définissent entre eux un angle α supérieur à 0° et inférieur ou égal à 90°, à chaque interrupteur à lames souples étant associé un aimant permanent pour sa polarisation.

Ainsi de manière avantageuse, les interrupteurs à lames souples du capteur selon l'invention étant montés polarisés respectivement par un aimant permanent, non parallèles l'un à l'autre, et dans le champ magnétique de l'aimant tournant, ils génèrent deux signaux en quadrature permettant de déterminer le sens de rotation dudit aimant tournant d'une manière simple.

De préférence, l'angle α, défini par les deux interrupteurs à lames souples se situe dans la plage [45°-90°] et, de préférence, [60°-90°].

Un capteur selon l'invention permet donc de mesurer la vitesse de rotation d'une pièce rotative ainsi que le sens de rotation de ladite pièce. Dans le cas d'un compteur de liquide, la vitesse de rotation permet de définir les impulsions volumétriques.

Les interrupteurs à lames souples peuvent être du type ampoule reed.

De manière avantageuse, les interrupteurs à lames souples sont polarisés au milieu de leur zone d'hystérésis et, de préférence, on utilise des interrupteurs à lames souples à faible hystérèsis

On obtient ainsi non seulement une seule fermeture du contact électrique mais on atteint également une sensibilité très élevée des interrupteurs au champ magnétique de l'aimant permanent associé à la pièce rotative.

Cette grande sensibilité des interrupteurs permet de s'affranchir de contraintes de structure trop rigides, le capteur pouvant fonctionner de manière totalement satisfaisante quelle que soit la distance de l'aimant tournant par rapport aux interrupteurs, ceux-ci restant sensibles au champ magnétique de l'aimant tournant. Ainsi, on peut positionner ledit capteur relativement éloigné de l'aimant permanent associé à la pièce rotative comme cela peut être nécessaire lorsqu'un tel capteur est mis en place dans un dispositif de mesure tel qu'un compteur d'eau.

Un capteur selon l'invention permet non seulement d'obtenir une reproductibilité et une industrialisation simples, en particulier lorsque l'élément sensible travaille autour de son point d'équilibre comme les montages dits en pont, et offrant une stabilité des performances du capteur, mais il offre également une possibilité de miniaturisation simple ainsi qu'un coût de revient faible tout en autorisant une production en quantité peu élevée.

De préférence, l'axe des interrupteurs à lames souples ainsi que l'axe de leur aimant permanent associé sont situés dans un même plan. Dans ce cas, l'axe de rotation de l'aimant permanent tournant associé à la pièce rotative peut être, de préférence, perpendiculaire audit plan.

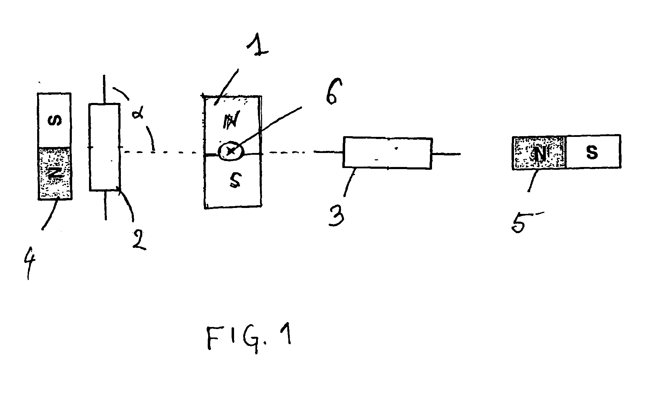

On décrira maintenant l'invention plus en détail en référence au dessin en annexe dans lequel la figure 1 représente une vue en plan d'un exemple de réalisation d'un capteur selon l'invention.

Le capteur selon l'invention est destiné à mesurer la rotation et à déterminer le sens de rotation d'une pièce rotative ou entraînable en rotation. Le capteur est donc constitué d'un aimant permanent 1 fixé à la pièce dont on souhaite mesurer la vitesse et le sens de rotation.

Dans le champ magnétique de cet aimant permanent 1, on met en place deux interrupteurs à lames souples (ILS) 2 et 3 auxquels on associe respectivement un aimant permanent 4, 5 polarisant lesdits interrupteurs à lames souples 2 et 3. De cette manière, on a une seule ouverture du contact par révolution de la pièce tournante et donc de l'aimant 1, la valeur moyenne de l'intensité du champ magnétique total vu par chaque interrupteur à lames souples se situant au milieu de l'hystérèsis de chaque interrupteur à lames souples 2 et 3. On obtient ainsi une très grande sensibilité du capteur.

Les interrupteurs à lames souples 2 et 3 sont disposés perpendiculaires l'un à l'autre, l'angle α étant donc de 90° dans l'exemple décrit et leurs axes étant dans le même plan. Les interrupteurs 2, 3 dans cette disposition génèrent deux signaux en quadrature quasi parfaits.

Les aimants permanents 4 et 5 ont leur axe s'étendant dans le même plan que celui des interrupteurs à lames souples 2 et 3 auxquels ils sont associés, l'aimant 4 s'étendant parallèle à l'interrupteur à lames souples 2 qu'il polarise et l'aimant 5 s'étendant dans le prolongement de l'interrupteur à lames souples 3 auquel il est associé pour le polariser.

Ce positionnement des aimants 4 et 5 est déterminé en fonction de la polarisation des interrupteurs à lames souples 2, 3 et de manière que l'aimant 4 de l'interrupteur à lames souples 2 ne perturbe pas l'autre interrupteur à lames souples 3. Cette architecture particulière des interrupteurs à lames souples 2, 3 et de leurs aimants permanents respectifs 4, 5 confèrent également au capteur une très grande facilité de réglage et une sensibilité élevée.

L'aimant 1 monté sur la pièce tournante présente un axe de rotation 6 perpendiculaire au plan dans lequel sont mis en place les interrupteurs à lames souples et leurs aimants associés.

## Revendications

1. Capteur pour la mesure de la vitesse et du sens de rotation d'une pièce rotative du type comportant un aimant permanent (1) monté sur la pièce rotative dit tournant et deux interrupteurs à lames souples (2, 3) disposés dans le champ magnétique de l'aimant permanent tournant (1),
**caractérisé en ce que** les deux interrupteurs à lames souples (2, 3) définissent entre eux un angle α supérieur à 0° et inférieur ou égal à 90°, à chaque interrupteur à lames souples (2, 3) étant associé un aimant permanent (4, 5) pour sa polarisation.

2. Capteur selon la revendication 1,
**caractérisé en ce que** l'angle α, défini par les deux interrupteurs à lames souples, se situe dans la plage [45°-90°].

3. Capteur selon l'une des revendications 1 et 2,
**caractérisé en ce que** l'angle α se situe dans la plage [60°-90°].

4. Capteur selon l'une des revendications 1 à 3,
**caractérisé en ce que** les interrupteurs à lames souples (2, 3) sont polarisés au milieu de leur zone d'hystérésis.

5. Capteur selon l'une des revendications 1 à 4,
**caractérisé en ce que** les interrupteurs à lames souples sont du type ampoule reed.

6. Capteur selon l'une des revendications 1 à 5,
**caractérisé en ce que** les interrupteurs à lames souples (2, 3) ont une faible hystérèsis.

7. Capteur selon l'une des revendications 1 à 6,
**caractérisé en ce que** les axes des interrupteurs à lames souples (2, 3) s'étendent dans un même plan.

8. Capteur selon la revendication 7,
**caractérisé en ce que** l'axe de rotation de l'aimant permanent tournant (1) est perpendiculaire audit plan.

9. Capteur selon l'une des revendications 7 et 8,
**caractérisé en ce que** les axes des aimants permanents de polarisation (4, 5) s'étendent dans le même plan que celui des axes des interrupteurs à lames souples (2, 3).

10. Capteur selon l'une des revendications 7 à 9,
**caractérisé en ce que** les axes des interrupteurs à lames souples (2, 3) s'étendent dans un même plan, l'angle α étant de 90°, l'un des aimants permanents (4) de polarisation s'étendant dans le même plan parallèlement à l'interrupteur à lames souples (2) et l'autre aimant permanent (5) de polarisation s'étendant dans le même plan dans le prolongement de l'interrupteur à lames souples (3) auquel il est associé, l'axe de rotation (6) de l'aimant permanent tournant (1) étant perpendiculaire audit plan.

## Claims

1. Sensor for measuring the speed and the sense of rotation of a rotating part, of the type comprising a so-called turning permanent magnet (1) mounted on the rotating part and two leaf switches (2, 3) arranged in the magnetic field of the turning permanent magnet (1),
**characterised in that** the two leaf switches (2, 3) define an angle α greater than 0° and less than or equal to 90° between them, a permanent magnet (4, 5) being associated with each leaf switch (2, 3) in order to polarise it.

2. Sensor according to Claim 1,
**characterised in that** the angle α defined by the two leaf switches lies in the range [45°-90°].

3. Sensor according to one of Claims 1 and 2,
**characterised in that** the angle α lies in the range [60°-90°].

4. Sensor according to one of Claims 1 to 3,
**characterised in that** the leaf switches (2, 3) are polarised by means of their hysteresis zone.

5. Sensor according to one of Claims 1 to 4,
**characterised in that** the leaf switches are of the reed type.

6. Sensor according to one of Claims 1 to 5,
**characterised in that** the leaf switches (2, 3) have a small hysteresis.

7. Sensor according to one of Claims 1 to 6,
**characterised in that** the axes of the leaf switches (2, 3) extend in the same plane.

8. Sensor according to Claim 7,
**characterised in that** the axis of rotation of the turning permanent magnet (1) is perpendicular to the said plane.

9. Sensor according to one of Claims 7 and 8,
**characterised in that** the axes of the polarising permanent magnets (4, 5) extend in the same plane as the axes of the leaf switches (2, 3).

10. Sensor according to one of Claims 7 to 9,
**characterised in that** the axes of the leaf switches (2, 3) extend in the same plane, the angle α being 90°, one of the polarising permanent magnets (4) extending parallel to the leaf switch (2) in the same plane and the other polarising permanent magnet (5) extending in the same plane in extension of the leaf switch (3) with which it is associated, the axis of rotation (6) of the turning permanent magnet (1) being perpendicular to the said plane.

## Patentansprüche

1. Messwertgeber zur Messung der Geschwindigkeit und der Drehrichtung eines rotierenden Teils, mit einem an dem rotierenden Teil montierten, so genannten drehenden Permanentmagneten (1) und zwei im Magnetfeld des drehenden Permanentmagneten (1) angeordneten Reedkontakten (2, 3), **dadurch gekennzeichnet, dass** die beiden Reedkontakte (2, 3) untereinander einen Winkel α bilden, der größer als 0° und kleiner als oder gleich 90° ist, wobei jedem Reedkontakt (2, 3) zu seiner Polarisation ein Permanentmagnet (4, 5) zugeordnet ist.

2. Messwertgeber nach Anspruch 1, **dadurch gekennzeichnet, dass** der Winkel α, den die beiden Reedkontakte bilden, im Bereich [45° - 90°] liegt.

3. Messwertgeber nach einem der Ansprüche 1 und 2, **dadurch gekennzeichnet, dass** der Winkel α im Bereich [60° - 90°] liegt.

4. Messwertgeber nach einem der Ansprüche 1 bis 3, **dadurch gekennzeichnet, dass** die Reedkontakte (2, 3) auf die Mitte ihres Hysteresebereichs polarisiert sind.

5. Messwertgeber nach einem der Ansprüche 1 bis 4, **dadurch gekennzeichnet, dass** die Reedkontakte als Reed-Glasröhrchen ausgeführt sind.

6. Messwertgeber nach einem der Ansprüche 1 bis 5, **dadurch gekennzeichnet, dass** die Reedkontakte (2, 3) eine geringe Hysterese aufweisen.

7. Messwertgeber nach einem der Ansprüche 1 bis 6, **dadurch gekennzeichnet, dass** die Achsen der Reedkontakte (2, 3) in derselben Ebene verlaufen.

8. Messwertgeber nach Anspruch 7, **dadurch gekennzeichnet, dass** die Rotationsachse des drehenden Permanentmagneten (1) orthogonal zu dieser Ebene liegt.

9. Messwertgeber nach einem der Ansprüche 7 und 8, **dadurch gekennzeichnet, dass** die Achsen der Polarisationspermanentmagneten (4, 5) in derselben Ebene wie die Achsen der Reedkontakte (2, 3) verlaufen.

10. Messwertgeber nach einem der Ansprüche 7 bis 9, **dadurch gekennzeichnet, dass** die Achsen der Reedkontakte (2, 3) in derselben Ebene in einem Winkel α von 90° zueinander liegen, wobei einer der Polarisationspermanentmagneten (4) in derselben Ebene parallel zum Reedkontakt (2) und der andere Polarisationspermanentmagnet (5) in derselben Ebene in der Verlängerung des Reedkontakts (3), dem er zugeordnet ist, liegt, wobei die Rotationsachse (6) des drehenden Permanentmagneten (1) orthogonal zu dieser Ebene verläuft.
